# EUROPÄISCHE PATENTSCHRIFT

(11) **EP 4 493 367 B1**
(45) Veröffentlichungstag und Bekanntmachung des Hinweises auf die Patenterteilung: **08.10.2025**
(21) Anmeldenummer: 22716897.8
(22) Anmeldetag: 18.03.2022
(51) Int. Cl.: B25J 19/02, B25J 19/06, B25J 9/16

(54) **VERFAHREN ZUM BETRIEB EINER ROBOTERBAUGRUPPE UND ROBOTERBAUGRUPPE**
METHOD OF OPERATING A ROBOT ASSEMBLY AND ROBOT ASSEMBLY
PROCÉDÉ DE FONCTIONNEMENT D'UN ENSEMBLE ROBOT ET ENSEMBLE ROBOT

(43) Veröffentlichungstag der Anmeldung: 22.01.2025
(73) Patentinhaber: ROUNDPEG TECHNOLOGIES GMBH, 85609 Aschheim (DE)
(72) Erfinder: EICHSTAEDT, Etienne, 85609 Aschheim (DE); WIESER, Hermann, 85609 Aschheim (DE); KRIEG, Oliver, 85609 Aschheim (DE)
(74) Vertreter: Maiwald GmbH
(86) Internationale Anmeldenummer: PCT/EP2022/057193
(87) Internationale Veröffentlichungsnummer: WO 2023/174558

(56) Entgegenhaltungen:
- WO-A1-2020/090342
- WO-A1-2022/019582
- US-A1- 2018 229 379
- US-A1- 2019 143 522
- US-B2- 8 504 203

## Beschreibung

Die Erfindung betrifft ein Verfahren zum Betrieb einer Roboterbaugruppe, wobei an einer Oberfläche der Roboterbaugruppe eine Mehrzahl an Abstandssensoreinheiten zur Kollisionsabsicherung der Roboterbaugruppe angeordnet ist.

Außerdem ist die Erfindung auf eine Roboterbaugruppe gerichtet. Die Roboterbaugruppe umfasst eine Manipulatoreinheit und/oder einer Effektoreinheit, eine Mehrzahl an Abstandssensoreinheiten zur Kollisionsabsicherung der Roboterbaugruppe, und eine Steuerungseinheit. Dabei sind die Abstandssensoreinheiten an einer Oberfläche der Manipulatoreinheit und/oder an einer Oberfläche der Effektoreinheit angeordnet.

In diesem Zusammenhang wird unter der Manipulatoreinheit eine programmierbare Vorrichtung verstanden, die ein Ende aufweist, das sich im Wesentlichen frei im Raum positionieren lässt. Beispielsweise ist die Manipulatoreinheit als Roboterarm ausgeführt. Unter der Effektoreinheit wird eine Baugruppe verstanden, die zur Interaktion mit einem zu bearbeitenden und/oder handzuhabenden Werkstück ausgebildet ist. Beispielsweise kann die Effektoreinheit als Greifereinheit oder als Werkzeugeinheit ausgebildet sein.

Eine Kollisionsabsicherung, die auf der Roboterbaugruppe angeordnete Abstandssensoreinheiten verwendet, wird auch als roboterzentrierte Absicherung bezeichnet.

Solche Roboterbaugruppen und Verfahren zu deren Betrieb sind aus dem Stand der Technik bekannt. Dabei werden Roboterbaugruppen mit einer Mehrzahl an Abstandssensoreinheiten zur Kollisionsabsicherung insbesondere dann verwendet, wenn sich die Roboterbaugruppen ihren Arbeitsraum mit Menschen teilt. Das ist unter dem Begriff Mensch-Roboter-Kooperation AS:TOP
bekannt. In solchen Fällen wird mittels der Abstandssensoreinheiten sichergestellt, dass die innerhalb des Arbeitsraums der Roboterbaugruppe anwesenden Menschen unversehrt bleiben. Außerdem müssen Kollisionen der Roboterbaugruppe und ihrer Komponenten mit weiteren, nicht-menschlichen Objekten im Arbeitsraum vermieden werden. Basierend auf den mittels der Abstandssensoreinheiten gemessenen Abständen kann eine Bewegung der Roboterbaugruppe verlangsamt, in ihrer Richtung geändert, gestoppt oder gänzlich verhindert werden. Eine Arbeitsgeschwindigkeit der Roboterbaugruppe ist dabei von einem Erfassungsbereich der Abstandssensoreinheiten abhängig. Die Roboterbaugruppe darf sich nämlich stets nur so schnell bewegen, dass sie zum Stehen kommen kann oder auf eine gewünschte Geschwindigkeit abgebremst werden kann, bevor sie mit einem detektierten Menschen oder Objekt in Kontakt tritt. Die US 2019/143522 A1 offenbart einen Roboter. Ferner sind aus der US 8 504 203 B2 ein Manipulator und ein Verfahren zur Steuerung desselben bekannt. In der US 2018/229379 A1 sind eine Kontaktbestimmungsvorrichtung, eine Steuervorrichtung, ein Kontaktbestimmungssystem, ein Kontaktbestimmungsverfahren und ein Kontaktbestimmungsprogramm beschrieben.

Demgegenüber ist eine Arbeitsgeschwindigkeit von Roboterbaugruppen, die sich ihren Arbeitsraum nicht mit Menschen teilen, lediglich durch den auszuführenden Prozess und/oder die Leistungsfähigkeit der Antriebe der Roboterbaugruppe begrenzt. In manchen Anwendungsfällen können daher mit solchen Roboterbaugruppen höhere Arbeitsgeschwindigkeit und damit eine höhere Arbeitseffizienz erreicht werden als dies mit Roboterbaugruppen möglich ist, die im Rahmen einer Mensch-Roboter-Kooperation betrieben werden.

Die Aufgabe der Erfindung besteht daher darin, die Effizienz von Roboterbaugruppen, die im Rahmen einer Mensch-Roboter-Kooperation betrieben werden, weiter zu erhöhen. Dabei sollen selbstverständlich die bekannten Sicherheitsstandards eingehalten werden.

Die Aufgabe wird durch ein Verfahren zum Betrieb einer Roboterbaugruppe der eingangs genannten Art gelöst, umfassend die folgenden Schritte:
- Vorsehen eines Abschaltraums, der innerhalb eines Arbeitsraums der Roboterbaugruppe ortsfest oder abhängig von einer Pose der Roboterbaugruppe definiert ist, wobei der Abschaltraum ein Abschnitt des Arbeitsraums der Roboterbaugruppe ist, in dem eine unerwünschte Kollision der Roboterbaugruppe oder ihrer Komponenten mit einem Menschen und/oder anderen Objekten ausgeschlossen werden kann,
- Betreiben derjenigen Abstandssensoreinheiten, die sich außerhalb des Abschaltraums befinden, zur Kollisionsabsicherung der Roboterbaugruppe, und
- Wirkungsloshalten derjenigen Abstandssensoreinheiten, die sich innerhalb des Abschaltraums befinden.

Der Abschaltraum kann also auch als Kollisions-Ausschluss-Raum bezeichnet werden. Somit ist eine Arbeitsgeschwindigkeit derjenigen Abschnitte der Roboterbaugruppe, die sich innerhalb des Abschaltraums befinden, lediglich durch Anforderungen des auszuführenden Prozesses sowie durch die Leistungsfähigkeit von Antrieben der Roboterbaugruppe beschränkt. Eine roboterzentrierte Kollisionsabsicherung ist innerhalb des Abschaltraums nicht erforderlich. Die Prüfung, ob eine Abstandssensoreinheit innerhalb oder außerhalb des Abschaltraums angeordnet ist, erfolgt individuell, d. h. für jede der Abstandssensoreinheiten einzeln. In diesem Zusammenhang umfasst die Mehrzahl an Abstandssensoreinheiten wenigstens zwei Abstandssensoreinheiten. Somit kann insgesamt eine Arbeitsgeschwindigkeit der Roboterbaugruppe erhöht werden, wobei die bekannten, hohen Sicherheitsstandards eingehalten werden. Die Roboterbaugruppe kann somit mit hoher Arbeitseffizienz betrieben werden. Dies gilt in besonderem Maße, wenn man berücksichtigt, dass sich häufig verschiedene Abschnitte der Roboterbaugruppe mit verschiedenen Geschwindigkeiten bewegen. In zahlreichen Anwendungen bewegen sich dabei Abschnitte der Roboterbaugruppe, die nahe an einem Effektor angeordnet sind, schneller als Abschnitte der Roboterbaugruppe, die nahe an einer Roboterbasis angeordnet sind. Der Effizienzgewinn ist somit besonders deutlich, wenn sich diejenigen Abschnitte der Roboterbaugruppe, die mit vergleichsweise hohe Geschwindigkeit betrieben werden, im Abschaltraum befinden. Ein Wirkungsloshalten einzelner Abstandssensoreinheiten fördert zudem die Energieeffizienz. Darüber hinaus wird ein Effizienzgewinn hinsichtlich der Verarbeitung von Sensordaten realisiert.

Beim Abschaltraum handelt es sich um einen dreidimensionalen Raum.

Ein Wirkungsloshalten von Abstandssensoreinheiten wird beispielsweise durch Abschalten oder Deaktivieren umgesetzt. Auch ist es möglich, in einer Steuerungseinheit der Roboterbaugruppe, die Detektionsergebnisse der wirkungslos zu haltenden Abstandssensoreinheiten schlicht zu ignorieren.

Dabei kann ein ortsfest definierter Abschaltraum ein Abschnitt des Arbeitsraums sein, der durch wenigstens ein Umgebungsobjekt oder durch wenigstens eine Sicherheitseinrichtung für Kollisionsobjekte unzugänglich ist. Mit anderen Worten ist es aufgrund des Umgebungsobjekts oder der Sicherheitseinrichtung ausgeschlossen, dass ein Kollisionsobjekt, worunter vorliegend auch ein Mensch verstanden wird, in den Abschaltraum eintritt. Dabei kann die Roboterbaugruppe selbst auch die Unzugänglichkeit bewirken. Das kann daran liegen, dass Räume zwischen der Roboterbaugruppe und Umgebungsobjekten sowie Sicherheitseinrichtungen so geformt sein können, dass ein Kollisionsobjekt nicht in den Abschaltraum eintreten kann. Auch ist es möglich, dass die Räume zwischen der Roboterbaugruppe und Umgebungsobjekten sowie Sicherheitseinrichtungen schlicht zu klein für ein Kollisionsobjekt sind. Umgebungsobjekte sind in diesem Zusammenhang beispielsweise Wände, Decken, Säulen oder sonstige Objekte, die in einer Umgebung der Roboterbaugruppe vorhanden sind. Sicherheitseinrichtungen können beispielsweise als Zäune, Gitter und/oder Lichtschranken ausgebildet sein. Es werden also im Abschaltraum Kollisionen der Roboterbaugruppe mit einem Kollisionsobjekt zuverlässig ausgeschlossen, sodass die Roboterbaugruppe im Abschaltraum mit erhöhter Arbeitsgeschwindigkeit betrieben werden kann.

Ferner kann ein abhängig von einer Pose der Roboterbaugruppe definierter Abschaltraum ein Abschnitt des Arbeitsraums sein, der durch eine die Pose bildende räumliche Anordnung von Komponenten der Roboterbaugruppe für Kollisionsobjekte unzugänglich ist. Die Komponenten der Roboterbaugruppe sind in diesem Fall also so im Raum positioniert, dass entweder aufgrund seiner Größe oder aufgrund seiner Form ein Kollisionsobjekt nicht in den Abschaltraum eindringen kann. Wieder wird unter einem Kollisionsobjekt auch ein Mensch verstanden. Es kann also auch in diesem Fall zuverlässig ausgeschlossen werden, dass im Abschaltraum eine Kollision stattfindet. Folglich können diejenigen Abschnitte der Roboterbaugruppe, die sich im Abschaltraum befinden, mit hoher Geschwindigkeit betrieben werden.

In einer Variante wird der Abschaltraum eingelernt. Mit anderen Worten wird der Abschaltraum geteacht. Die Roboterbaugruppe fährt also gezielt Grenzpunkte oder Grenzflächen des Abschaltraums an. Dann wird eine zugehörige Position gespeichert und mit einer Lagedefinition des Abschaltraums verknüpft. Der Abschaltraum ist also auf einer Steuerungseinheit der Roboterbaugruppe hinterlegt. Auf diese Weise lässt sich einfach und zuverlässig ein Abschaltraum vorsehen. In einem Beispiel befindet sich ein Abschaltraum im Inneren eines Behälters, aus dem die Roboterbaugruppe Objekte entnimmt. In einem solchen Fall werden beispielsweise Punkte des Behälterrands als Grenzpunkte des Abschaltraums eingelernt.

In einer Ausführungsform wird jede der Abstandssensoreinheiten beim Einfahren in den Abschaltraum wirkungslos geschaltet. Auf diese Weise wird sichergestellt, dass Abstandssensoreinheiten, die sich innerhalb des Abschaltraums befinden, wirkungslos sind. Diese Abstandssensoreinheiten werden also nicht zur Kollisionsabsicherung verwendet, sodass zumindest diejenigen Abschnitte der Roboterbaugruppe, die sich im Abschaltraum befinden, mit hohen Arbeitsgeschwindigkeiten betrieben werden können.

Zudem kann jede der Abstandssensoreinheiten beim Herausfahren aus dem Abschaltraum zur Kollisionsabsicherung der Roboterbaugruppe den Betrieb aufnehmen. Soweit eine Abstandssensoreinheit den Abschaltraum verlässt, wird sie also wieder zu Kollisionsabsicherung verwendet. Folglich ist die Roboterbaugruppe, genauer gesagt diejenigen Abschnitte der Roboterbaugruppe, die sich außerhalb des Abschaltraum befinden, zuverlässig gegen Kollisionen abgesichert.

In einer Alternative wird für jede Abstandssensoreinheit periodisch überprüft, ob sie sich innerhalb oder außerhalb des Abschaltraums befindet. In diesem Zusammenhang wird für jede Abstandssensoreinheit ihre Position innerhalb der Roboterbaugruppe als bekannt vorausgesetzt. Derartige Informationen können auf einer Steuerungseinheit der Roboterbaugruppe hinterlegt sein. Zudem wird vorausgesetzt, dass Informationen über eine aktuelle Stellung von beweglichen Gelenken innerhalb der Roboterbaugruppe aufgrund entsprechender Sensoren zur Verfügung stehen. Zugehörige Sensorwerte können an eine Steuerungseinheit der Roboterbaugruppe kommuniziert werden. Auf diese Weise lässt sich für jede Abstandssensoreinheit zuverlässig ermitteln, ob sie sich innerhalb des Abschaltraums befindet oder außerhalb. Eine periodische Überprüfung ist dabei hinsichtlich Rechenkapazitäten und Energieaufwand effizient. Eine zugeordnete Überprüfungsfrequenz lässt sich zudem situationsgerecht einstellen.

Alternativ oder zusätzlich kann ein Erfassungsradius einer benachbart zu einem Abschaltraum positionierten Abstandssensoreinheit auf einen Abstand der Abstandssensoreinheit vom Abschaltraum eingestellt werden. Das bedeutet, dass ein Abstand der Abstandssensoreinheit vom Abschaltraum dem Erfassungsradius der Abstandssensoreinheit entspricht. Mittels des Erfassungsradius wird um die Abstandssensoreinheit ein kugelsegmentförmiger Erfassungsbereich aufgespannt. Auf diese Weise wird sichergestellt, dass die Abstandssensoreinheit lediglich außerhalb des Abschaltraums zur Kollisionsabsicherung verwendet wird. Mit anderen Worten können Objekte innerhalb des Abschaltraums nicht detektiert werden. Ein derartiges Einstellen des Erfassungsradius bedeutet, dass dieser sukzessive verkleinert wird, wenn ein die Abstandssensoreinheiten tragender Abschnitt der Roboterbaugruppe sich einem Abschaltraum nähert. In gleicher Weise kann der Erfassungsradius vergrößert werden, wenn sich ein Abschnitt der Roboterbaugruppe, auf dem die Abstandssensoreinheit befestigt ist, vom Abschaltraum entfernt. Auf diese Weise wird sichergestellt, dass bis zu einer Grenzfläche des Abschaltraums eine zuverlässige Kollisionsüberwachung stattfindet.

Alternativ kann ein Erfassungsradius einer benachbart zu einem Abschaltraum positionierten Abstandssensoreinheit kleiner als ein Abstand der Abstandssensoreinheit vom Abschaltraum eingestellt werden. Beispielsweise lässt sich der Erfassungsradius auf einen Prozentsatz kleiner 100 % des Abstands einstellen, zum Beispiel 95 % oder 98 %. Dabei wird bewusst in Kauf genommen, dass zwischen einer Grenzfläche des Abschaltraums und einem vom Erfassungsradius aufgespannten Erfassungsbereich der Abstandssensoreinheit eine Erfassungslücke oder Detektionslücke entsteht. Allerdings wird der Erfassungsradius so eingestellt, dass die Erfassungslücke stets kleiner als eine vorgegebene Maximallücke, d.h. eine Lücke mit einer vorgegebenen Maximalgröße, ist. Auf diese Weise wird sichergestellt, dass trotz der Erfassungslücke alle potentiellen Kollisionsobjekte erfasst werden. Gleichzeitig wird in dieser Alternative sichergestellt, dass Elemente oder Objekte, die den Abschaltraum physisch begrenzen, zuverlässig nicht als Kollisionsobjekte erkannt werden. Die Roboterbaugruppe lässt sich somit effizient betreiben.

In einer Ausführungsform werden Erfassungsradien von an der Oberfläche der Roboterbaugruppe benachbart angeordneten Abstandssensoreinheiten, die aneinander angrenzende oder einander überlappende Erfassungsbereiche aufspannen, derart aufeinander abgestimmt, dass zwischen den Erfassungsbereichen liegende Erfassungslücken eine Maximalgröße nicht überschreiten. Das bewirkt, dass in Situationen, in denen gemäß den obigen Erläuterungen ein Erfassungsradius einer Abstandssensoreinheit verändert wird, keine unerwünschten Erfassungslücken entstehen. Die Roboterbaugruppe ist somit stets zuverlässig gegenüber unerwünschten Kollisionen abgesichert.

Zusätzlich wird die Aufgabe durch eine Roboterbaugruppe der eingangs genannten Art gelöst, bei der die Steuerungseinheit Mittel zur Ausführung des erfindungsgemäßen Verfahrens umfasst. Eine derartige Roboterbaugruppe lässt sich also unter Wahrung gewohnt hoher Sicherheitsstandards hinsichtlich unerwünschten Kollisionen mit vergleichsweise großen Arbeitsgeschwindigkeiten betreiben. Mit anderen Worten kann eine derartige Roboterbaugruppe effizient und gleichzeitig sicher betrieben werden. Es versteht sich dabei, dass die Steuerungseinheit Mittel umfassen kann, um einzelne Abstandssensoreinheiten wirkungslos zu schalten, wirkungslos zu halten und wieder in Betrieb zu schalten. Wie bereits erwähnt, kann eine Abstandssensoreinheit entweder dadurch wirkungslos gehalten werden, dass sie abgeschaltet oder deaktiviert wird. Zu diesem Zweck kann eine Energieversorgung der Abstandssensoreinheiten selektiv unterbrochen werden. Auch ist es möglich, schlicht ein Detektionsergebnis der Abstandssensoreinheiten situationsgerecht zu ignorieren.

Dabei können die Abstandssensoreinheiten nach einem Time-of-Flight-Verfahren arbeiten. In diesem Zusammenhang umfasst ein nach einem Time-of-Flight-Verfahren arbeitender Sensor eine Sendeeinheit und eine Empfangseinheit. Wie bereits erwähnt, sind die Abstandssensoreinheiten mit der Steuerungseinheit gekoppelt, die eine Auswertungseinheit umfasst. Die Auswertungseinheit ermittelt in Abhängigkeit der Laufzeit, die ein von der Sendeeinheit abgegebenes Signal benötigt bis es von der Empfangseinheit detektiert wird, und unter Kenntnis einer Wellenausbreitungsgeschwindigkeit im relevanten Raum ein Sensorsignal in Form eines Abstandswerts. Time-of-Flight-Sensoren arbeiten somit vergleichsweise schnell und präzise. Dadurch sind sie besonders gut geeignet, um im Kontext von Roboterbaugruppen verwendet zu werden.

Zudem kann für jede Abstandssensoreinheit ein Erfassungsradius im Betrieb änderbar sein. Wie bereits erläutert, spannt jeder Erfassungsradius einen Erfassungsbereich auf. Dieser kann folglich situativ angepasst werden. Dadurch lässt sich einerseits sicherstellen, dass außerhalb des Abschaltraums die Roboterbaugruppe zuverlässig gegen Kollisionen abgesichert ist und andererseits keine Detektion innerhalb des Abschaltraums stattfindet.

In einer Variante umfasst jede der Abstandssensoreinheiten mindestens zwei Abstandssensoren. Dabei überlappen sich ein Erfassungsbereich eines der Abstandssensoren und ein Erfassungsbereich des jeweils anderen der Abstandssensoren zumindest abschnittsweise. Auch können die Erfassungsbereiche im Wesentlichen identisch sein oder einer der Erfassungsbereiche den jeweils anderen Erfassungsbereich vollständig umfasst. Es ergibt sich eine besonders zuverlässige Absicherung gegen unerwünschte Kollisionen.

Dabei ist es möglich, dass die Abstandssensoren einer Abstandssensoreinheit unterschiedliche Sensorprinzipien nutzen. Insbesondere nutzt einer der Abstandssensoren ein elektromagnetisches, vorzugsweise optisches, Sensorprinzip und ein anderer der Abstandssensoren ein akustisches Sensorprinzip. Das akustische Sensorprinzip basiert insbesondere auf Ultraschall. Nachdem unterschiedliche Sensorprinzipien unterschiedliche Vorteile und Nachteile haben, werden bei einer Kombination zweier Abstandssensoren mit unterschiedlichen Sensorprinzipien die Vorteile kombiniert, sodass sich eine besonders zuverlässige Kollisionsabsicherung ergibt. Beispielsweise kann so erreicht werden, dass beliebig bekleidete Personen sowie Gegenstände aus beliebigem Material, bei unterschiedlichen Umweltbedingungen (Helligkeit, Nebel, Luftfeuchtigkeit, etc.) erkannt werden können. Das gilt insbesondere im Vergleich zu kapazitiven Sensoren, die insbesondere bei schwankender Feuchtigkeit im Arbeitsraum und beim Auftreten von Staub weniger zuverlässig arbeiten.

Bei den Abstandssensoreinheiten kann es sich um Abstandssensoreinheiten einer Sicherheitseinrichtung gemäß der internationalen Patentanmeldung PCT/EP2021/054849 handeln. Dabei können die Abstandssensoreinheiten mit einer Auswerteeinheit der Sicherheitseinrichtung aus der internationalen Patentanmeldung PCT/EP2021/054849 signaltechnisch gekoppelt sein. Die Auswerteeinheit kann dabei als Bestandteil einer Steuerungseinheit der erfindungsgemäßen Roboterbaugruppe realisiert werden.

Es lässt sich somit zur Abstandsermittlung mittels der Abstandssensoreinheiten ein Verfahren zur Ermittlung eines Minimalabstands gemäß der internationalen Patentanmeldung PCT/EP2021/054849 verwenden.

Betreffend das Verfahren zur Ermittlung eines Minimalabstands sowie der Sicherheitseinrichtung mit einer Abstandssensoreinheit und einer Auswerteeinheit wird auf die internationale Patentanmeldung PCT/EP2021/054849 Bezug genommen.

Das Verfahren gemäß der internationalen Patentanmeldung PCT/EP2021/054849 zur Ermittlung eines Minimalabstands eines Objekts von einer Vorrichtungsoberfläche, insbesondere zur Ermittlung eines Minimalabstands eines Objekts von einer Vorrichtungsoberfläche einer Handhabungsvorrichtung, umfasst die folgenden Schritte:
- Erfassen eines Primärabstands des Objekts mittels einer an oder in der Vorrichtungsoberfläche positionierten ersten Abstandssensoreinheit, wobei der Primärabstand der Abstand des Objekts von der Abstandssensoreinheit ist,
- Ermitteln eines kritischen Punkts, der im Primärabstand von der ersten Abstandssensoreinheit sowie innerhalb eines Erfassungsbereichs der ersten Abstandssensoreinheit liegt und dabei unter Berücksichtigung eines räumlichen Verlaufs der Vorrichtungsoberfläche der Vorrichtungsoberfläche am nächsten kommt, und
- Ermitteln des Minimalabstands des kritischen Punkts von der Vorrichtungsoberfläche.

Ein solches Verfahren lässt sich einfach und zuverlässig ausführen. In diesem Zusammenhang wird berücksichtigt, dass Abstandssensoreinheiten üblicherweise zwar einen Abstand ermitteln können, jedoch nicht angeben können, wo innerhalb des zugehörigen Erfassungsbereichs der Abstand gemessen wird. Diese Problematik wird durch das Ermitteln des kritischen Punktes und des zugehörigen Minimalabstandes gelöst. Dabei ist ausgeschlossen, dass mittels des Verfahrens ein Minimalabstand ermittelt wird, der beispielsweise aufgrund eines räumlichen Verlaufs der Vorrichtungsoberfläche größer ist als ein realer Abstand. Vielmehr wird im Zweifelsfall ein etwas zu kleiner Abstand ausgegeben. Das Verfahren ist also besonders sicher. Die erfindungsgemäße Roboterbaugruppe weist in diesem Zusammenhang eine Vorrichtungsoberfläche auf. Genauer gesagt ist die Vorrichtungsoberfläche als eine Oberfläche der Manipulatoreinheit und/oder als eine Oberfläche der Effektoreinheit ausgebildet.

Die erfindungsgemäße Roboterbaugruppe kann zudem als Handhabungsvorrichtung im Sinne der internationalen Patentanmeldung PCT/EP2021/054849 ausgebildet sein.

Für das Verfahren müssen folgende Informationen bekannt sein: Verlauf der Vorrichtungsoberfläche zumindest im relevanten Bereich, Position der Abstandssensoreinheit auf der Vorrichtungsoberfläche, Erfassungsbereich der Abstandssensoreinheit. Diese Informationen lassen sich problemlos auf einer Steuereinheit hinterlegen, die zum Ausführen des Verfahrens ausgebildet ist. Es versteht sich zudem, dass ein Erfassungsbereich einer Abstandssensoreinheit stets so gewählt ist, dass die Vorrichtungsoberfläche diesen nicht abschirmt. Andernfalls wäre die Abstandssensoreinheit nicht mit der gewünschten Zuverlässigkeit betreibbar.

Die Sicherheitseinrichtung gemäß der internationalen Patentanmeldung PCT/EP2021/054849 ist für eine eine Vorrichtungsoberfläche aufweisende Handhabungsvorrichtung geeignet, insbesondere für einen eine Vorrichtungsoberfläche aufweisenden Roboter oder eine Roboterbaugruppe. Die Sicherheitseinrichtung umfasst eine an oder in der Vorrichtungsoberfläche, d.h. an einer Oberfläche der Manipulatoreinheit und/oder an einer Oberfläche der Effektoreinheit, positionierbare erste Abstandssensoreinheit und eine Auswertungseinheit, die mit der Abstandssensoreinheit signaltechnisch gekoppelt und dazu ausgebildet ist, im montierten Zustand der Abstandssensoreinheit das Verfahren gemäß der internationalen Patentanmeldung PCT/EP2021/054849 auszuführen. Mittels der Sicherheitseinrichtung lassen sich also einfach und zuverlässig Minimalabstände von Vorrichtungsoberflächen, d.h. von einer Oberfläche der Manipulatoreinheit und/oder von einer Oberfläche der Effektoreinheit, ermitteln. Dadurch können mit der Sicherheitseinrichtung ausgestattete Vorrichtungen, beispielsweise die erfindungsgemäße Roboterbaugruppe und insbesondere Handhabungsvorrichtungen, zuverlässig in solchen Arbeitsräumen betrieben werden, in denen potenziell kollisionsgefährdete Objekte und insbesondere auch Menschen anwesend sind.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Roboterbaugruppe, die mittels eines erfindungsgemäßen Verfahrens betreibbar ist, in einem ersten Betriebsszenario,
- Figur 2: die Roboterbaugruppe aus Figur 1 in einem zweiten Betriebsszenario,
- Figur 3: die Roboterbaugruppe aus den Figuren 1 und 2 in einem dritten Betriebsszenario, und
- Figuren 4 bis 6: eine Illustration eines einstellbaren Erfassungsbereichs von zwei exemplarischen Abstandssensoreinheiten der Roboterbaugruppe aus den Figuren 1 bis 3.

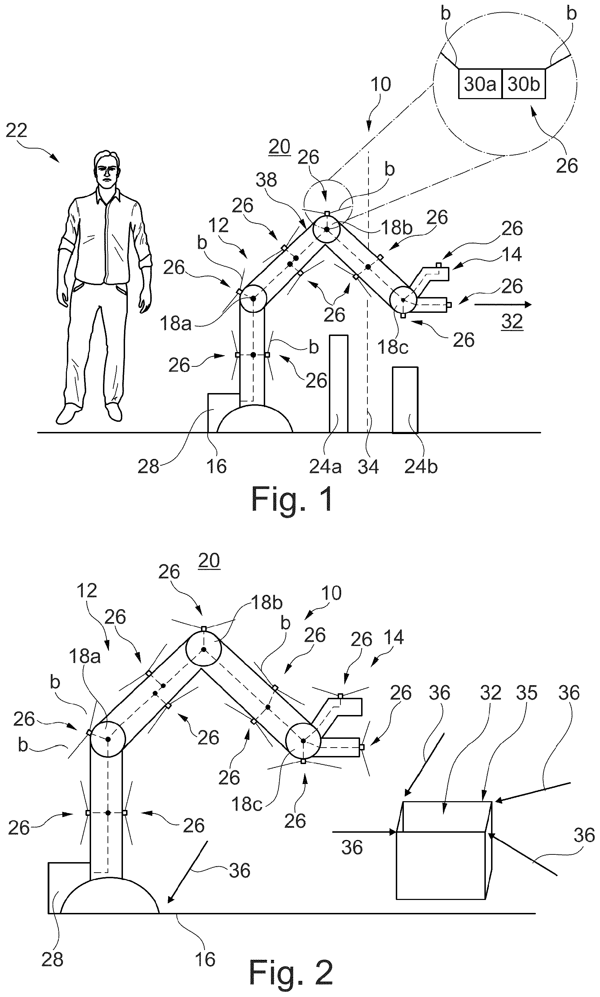

Figur 1 zeigt eine Roboterbaugruppe 10, die eine Manipulatoreinheit 12 und eine Effektoreinheit 14 umfasst.

In der dargestellten Ausführungsform ist die Manipulatoreinheit 12 als Roboterarm ausgebildet, der ein erstes Ende umfasst, das an einem Boden 16 fixiert ist.

An einem zweiten Ende des Roboterarms ist die Effektoreinheit 14 montiert. Dabei ist das zweite Ende des Roboterarms dem ersten Ende des Roboterarms entgegengesetzt.

Vorliegend ist die Effektoreinheit 14 als Greifereinheit ausgebildet.

Die Manipulationseinheit 12 weist ferner drei angetriebene Gelenke 18a, 18b, 18c auf. Jedes dieser angetriebenen Gelenke 18a, 18b, 18c ist mit einem nicht näher dargestellten Stellantrieb ausgestattet, sodass die Effektoreinheit 14 im Wesentlichen frei in einem Arbeitsraum 20 der Roboterbaugruppe 10 positioniert und orientiert werden kann.

Die Roboterbaugruppe 10 wird im Rahmen einer Mensch-Roboter-Kooperation betrieben.

Das bedeutet, dass im Arbeitsraum 20 der Roboterbaugruppe 10 auch ein Mensch 22 anwesend sein kann. Ferner können im Arbeitsraum 20 Objekte vorhanden sein, von denen zwei exemplarisch dargestellt sind. Wie nachfolgend noch erläutert werden wird, sollen Kollisionen zwischen der Roboterbaugruppe 10 und diesen Objekten verhindert werden. Aus diesem Grund werden die beiden exemplarisch dargestellten Objekte als Kollisionsobjekte 24a, 24b bezeichnet.

Kollisionen der Roboterbaugruppe 10, d. h. der Manipulatoreinheit 12 oder der Effektoreinheit 14 mit dem Menschen 22 und den Kollisionsobjekten 24a, 24b sind nicht erwünscht.

Die Roboterbaugruppe 10 ist daher mit einer Mehrzahl an Abstandssensoreinheiten 26 ausgestattet. Dabei sind einige der Abstandssensoreinheiten 26 an einer Oberfläche der Manipulatoreinheit 12 montiert. Andere der Abstandssensoreinheiten 26 sind an einer Oberfläche der Effektoreinheit 14 montiert. Insgesamt sind alle Abstandssensoreinheiten an einer Oberfläche der Roboterbaugruppe 10 befestigt.

Alle Abstandssensoreinheiten 26 dienen der Kollisionsabsicherung der Roboterbaugruppe 10.

Hierzu sind alle Abstandssensoreinheiten 26 mit einer Steuerungseinheit 28 signaltechnisch gekoppelt. Ebenfalls sind die angetriebenen Gelenke 18a, 18b, 18c, insbesondere deren Stellantriebe, signaltechnisch mit der Steuerungseinheit 28 gekoppelt.

Die Abstandssensoreinheiten 26 sind dazu ausgebildet, Abstände der Oberfläche der Roboterbaugruppe 10 vom Menschen 22 und den Kollisionsobjekten 24a, 24b zu ermitteln.

Basierend auf den mittels der Abstandssensoreinheiten 26 ermittelten Abständen können die angetriebenen Gelenke 18a, 18b, 18c zum Verhindern von Kollisionen derart mittels der Steuerungseinheit 28 angesteuert werden, dass eine Bewegung der Roboterbaugruppe 10 verlangsamt, in ihrer Richtung geändert, gestoppt oder gänzlich verhindert wird.

Um dies mit hoher Zuverlässigkeit erreichen zu können, umfasst jede der Abstandssensoreinheiten 26 zwei Abstandssensoren 30a, 30b. Dies ist in Figur 1 exemplarisch lediglich für eine der Abstandssensoreinheiten 26 dargestellt (vgl. Detaildarstellung). Es versteht sich, dass die übrigen Abstandssensoreinheiten 26 in gleicher Weise aufgebaut sind.

Dabei nutzen die Abstandssensoren 30a, 30b unterschiedliche Sensorprinzipien, wobei beide Abstandssensoren 30a, 30b nach einem Time-of-Flight-Verfahren arbeiten.

In der dargestellten Ausführungsform nutzt der Abstandssensor 30a ein optisches Sensorprinzip. Der Abstandssensor 30b ist ein Ultraschallsensor.

Die den Abstandssensoren 30a, 30b zugeordneten Erfassungsbereiche sind im Wesentlichen deckungsgleich.

Die Erfassungsbereiche haben die Form eines dreidimensionalen Kugelsegments, dessen Mittelpunkt durch die Abstandssensoreinheit 26 bzw. die von dieser umfassten Abstandssensoren 30a, 30b gebildet wird und das von einem zugehörigen Erfassungsradius aufgespannt wird. Derartige Erfassungsbereiche werden auch als kegelförmig oder kegelstumpfförmig bezeichnet. In den Figuren sind die Erfassungsbereiche durch dünne Begrenzungslinien b symbolisiert. Aus Gründen der besseren Übersichtlichkeit sind nur manche Begrenzungslinien mit einem Bezugszeichen versehen.

Bei der dargestellten Roboterbaugruppe 10 lassen sich die Erfassungsradien im Betrieb ändern, sodass die Größe der Erfassungsbereiche einstellbar ist.

In diesem Zusammenhang ist die Steuerungseinheit 28 dazu ausgebildet, die Erfassungsradien zu ändern und dadurch die Größe der Erfassungsbereiche einzustellen. Dies wird im Folgenden noch im Detail erläutert.

Die Steuerungseinheit 28 ist darüber hinaus dazu ausgebildet, ein Verfahren zum Betrieb der Roboterbaugruppe 10 auszuführen. Mit anderen Worten kann mittels der Steuerungseinheit 28 die Roboterbaugruppe 10 betrieben werden.

Hierzu werden die angetriebenen Gelenke 18a, 18b, 18c der Roboterbaugruppe 10 in Abhängigkeit einer mittels der Roboterbaugruppe 10 auszuführenden Aufgabe und der Detektionsergebnisse der Abstandssensoreinheiten 26 angesteuert.

In Figur 1 ist in diesem Zusammenhang ein erstes Betriebsszenario dargestellt.

In einem ersten Schritt des Verfahrens zum Betrieb der Roboterbaugruppe 10 wird ein Abschaltraum 32 vorgesehen. Der Abschaltraum 32 befindet sich innerhalb des Arbeitsraums 20.

Im Betriebsszenario gemäß Figur 1 ist der Abschaltraum 32 durch eine Sicherheitseinrichtung 34 in Form einer Lichtschranke von den übrigen Abschnitten des Arbeitsraums 20 abgegrenzt.

In diesem Zusammenhang kann durch die Lichtschranke ausgeschlossen werden, dass der Mensch 22 oder das Kollisionsobjekt 24a, mit dem keine Kollision stattfinden darf, in den Abschaltraum 32 gelangt.

Das Kollisionsobjekt 24b ist in diesem Betriebsszenario innerhalb des Abschaltraums 32 angeordnet und nicht kollisionsgefährdet.

Aus diesem Grund werden lediglich diejenigen Abstandssensoreinheiten 26, die sich außerhalb des Abschaltraums 32 befinden, zur Kollisionsabsicherung der Roboterbaugruppe 10 betrieben.

Diejenigen Abstandssensoreinheiten 26, die sich innerhalb des Abschaltraums 32 befinden, werden wirkungslos gehalten. In der Figur 1 ist das dadurch symbolisiert, dass bei denjenigen Abstandssensoreinheiten 26, die sich innerhalb des Abschaltraums 32 befinden, keine den Erfassungsbereich symbolisierenden Begrenzungslinien b dargestellt sind.

Von denjenigen Abstandssensoreinheiten 26, die sich innerhalb des Abschaltraums 32 befinden, können also keine Sensorwerte herrühren, die ein Verlangsamen oder ein Stoppen einer Bewegung der Roboterbaugruppe 10 bewirken würden. Dementsprechend können diejenigen Abschnitte der Roboterbaugruppe 10, die sich innerhalb des Abschaltraums 32 befinden, mit einer Arbeitsgeschwindigkeit betrieben werden, die lediglich durch die Leistungsfähigkeit der Stellantriebe der angetriebenen Gelenke 18a, 18b, 18c sowie gegebenenfalls einen mittels der Roboterbaugruppe 10 auszuführenden Prozess begrenzt ist.

Anders ist das bei denjenigen Abschnitten der Roboterbaugruppe 10, die sich außerhalb des Abschaltraums 32 befinden. Diese können nur mit einer Arbeitsgeschwindigkeit betrieben werden, die es stets erlaubt, zur Kollisionsabsicherung die relevanten Abschnitte der Roboterbaugruppe 10 rechtzeitig anzuhalten oder auf eine tolerierte Geschwindigkeit abzubremsen.

Im Betriebsszenario aus Figur 1 ist der Abschaltraum 32 als ortsfest definierter Abschnitt des Arbeitsraums 20 ausgebildet.

Es versteht sich dabei, dass die Figur 1 hinsichtlich der Roboterbaugruppe 10 eine Momentaufnahme zeigt.

Jede der Abstandssensoreinheiten 26 wird beim Einfahren in den Abschaltraum 32 wirkungslos geschaltet. Das wird mittels der Steuerungseinheit 28 realisiert.

Beim Herausfahren aus dem Abschaltraum 32 nimmt jede der Abstandssensoreinheiten 26 zur Kollisionsabsicherung den Betrieb wieder auf. Hierzu wird ebenfalls die Steuerungseinheit 28 verwendet.

Zu diesem Zweck wird mittels der Steuerungseinheit 28 für jede der Abstandssensoreinheiten 26 periodisch überprüft, ob sie sich innerhalb oder außerhalb des Abschaltraums 32 befindet. Hierzu ist auf der Steuerungseinheit 28 hinterlegt, an welchen Stellen der Roboterbaugruppe 10 die einzelnen Abstandssensoreinheiten 26 angebracht sind. Ferner ist der Steuerungseinheit 28 bekannt, welche Stellung die angetriebenen Gelenke 18a, 18b, 18c jeweils einnehmen.

Figur 2 zeigt ein zweites Betriebsszenario, bei dem die Roboterbaugruppe 10 dazu verwendet wird, nicht näher dargestellte Objekte aus einer Kiste 35 zu entnehmen.

Dabei ist die Kiste 35 derart dimensioniert, dass ausgeschlossen werden kann, dass sich der Mensch 22 oder eines der Kollisionsobjekte 24a, 24b in die Kiste bewegt, wenn ein Abschnitt der Roboterbaugruppe 10, genauer gesagt die Effektoreinheit 14 gerade in die Kiste 35 greift.

Somit ist das Innere der Kiste 35 als Abschaltraum 32 definiert.

Folglich ist also auch im zweiten Betriebsszenario der Abschaltraum 32 ortsfest innerhalb des Arbeitsbereichs 20 der Roboterbaugruppe 10 definiert.

Da jedoch ein Austausch der Kiste 35 zur Folge haben kann, dass sich eine Position der Kiste 35 innerhalb des Arbeitsbereichs 20 zumindest leicht verändert, wird im zweiten Betriebsszenario die Position des Abschaltraums 32 eingelernt. Mit anderen Worten wird die Position des Abschaltraums 32 geteacht.

Im zweiten Betriebsszenario werden hierzu beispielsweise die mit Pfeilen 36 gekennzeichneten Punkte angefahren und eingelernt.

Im Übrigen gelten die Erläuterungen zum ersten Betriebsszenario auch für das zweite Betriebsszenario.

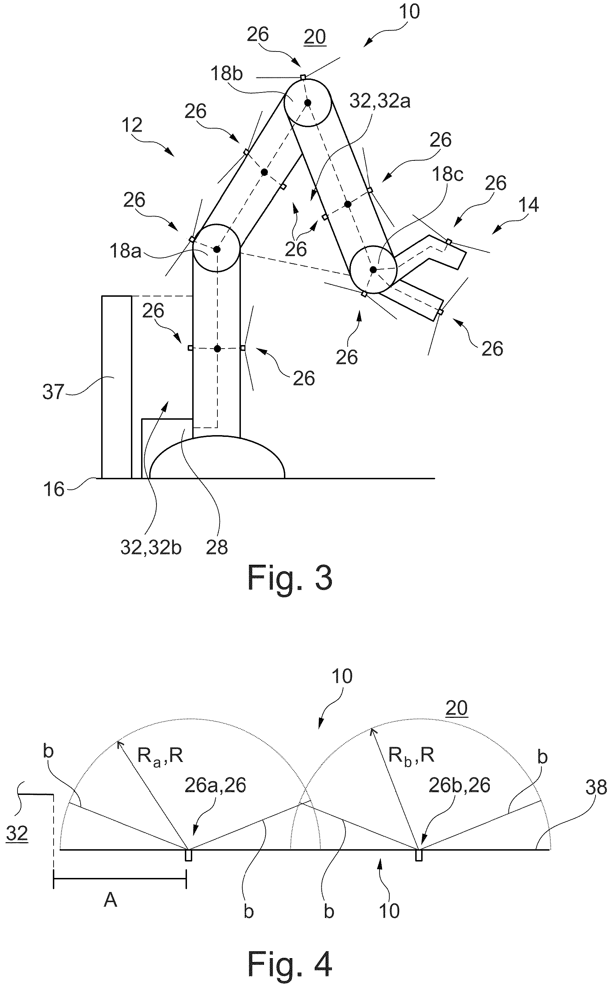

Ein drittes Betriebsszenario ist in Figur 3 gezeigt. Im Unterschied zu den zuvor erläuterten Betriebsszenarien ist nun der Abschaltraum 32 in Abhängigkeit einer Pose der Roboterbaugruppe 10 definiert.

Genauer gesagt sind im dritten Betriebsszenario zwei Abschalträume 32a, 32b vorgesehen.

Bei der dargestellten Pose der Roboterbaugruppe 10 ist aufgrund der räumlichen Anordnung der Komponenten der Roboterbaugruppe 10 der Abschaltraum 32a für den Menschen 22 und für andere Kollisionsobjekte, beispielsweise die Kollisionsobjekte 24a, 24b, unzugänglich.

Dasselbe gilt für den Abschaltraum 32b, der als Raum zwischen der Roboterbaugruppe 10 und einem Umgebungsobjekt 37, das vorliegend als Mauerabschnitt ausgebildet ist, aufgespannt ist.

Im Übrigen kann wieder auf die Erläuterungen zu den vorhergehenden Betriebsszenarien verwiesen werden.

Wie bereits erläutert, ist für jede der Abstandssensoreinheiten 26 ein Erfassungsradius R einstellbar. Dabei erfolgt die Einstellung der Erfassungsradien R mittels der Steuerungseinheit 28.

Dies wird nachfolgend anhand der Figuren 4 bis 6 erläutert. Diese Erläuterungen gelten für alle vorgenannten Betriebsszenarien.

Dabei sind zwei benachbarte Abstandssensoreinheiten 26 an einer lediglich schematisch dargestellten Oberfläche 38 der Roboterbaugruppe 10 angeordnet. Um die nachfolgenden Erläuterungen zu vereinfachen, werden diese Abstandssensoreinheiten mit 26a und 26b bezeichnet.

Dabei wird in der Ausgangssituation, die in Figur 4 dargestellt ist, die Abstandssensoreinheit 26a mit einem Erfassungsradius R betrieben, der zur besseren Unterscheidbarkeit zusätzlich mit Rₐ bezeichnet ist. Die Abstandssensoreinheit 26b wird ebenfalls mit einem Erfassungsradius R betrieben, der zur besseren Unterscheidbarkeit mit R_{b} bezeichnet ist. Die Erfassungsradien Rₐ, R_{b} sind im Wesentlichen gleich groß.

Beide Abstandssensoreinheiten 26a, 26b befinden sich außerhalb des Abschaltraums 32.

Allerdings ist die Abstandssensoreinheit 26a zum Abschaltraum 32 benachbart angeordnet. Ein Abstand A der Abstandssensoreinheit 26a vom Abschaltraum 32 ist dabei größer als der zugehörige Erfassungsradius Rₐ.

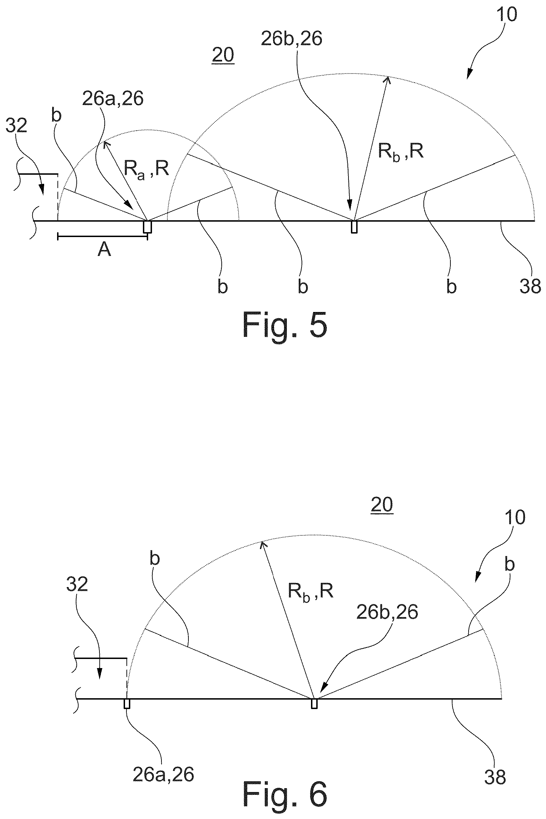

Wird nun die Roboterbaugruppe 10 mit der Oberfläche 38 in Richtung des Abschaltraums 32 bewegt, verringert sich der Abstand A der Abstandssensoreinheit 26a vom Abschaltraum 32 (siehe Figur 5 im Vergleich zu Figur 4).

Um auszuschließen, dass mittels der Abstandssensoreinheit 26a Kollisionsobjekte innerhalb des Abschaltraums 32 erfasst werden, wird der Erfassungsradius Rₐ der Abstandssensoreinheit 26a auf diesen Abstand A eingestellt. Der Abstand A und der Erfassungsradius Ra sind also im Wesentlichen gleich groß.

Gleichzeitig wird der Erfassungsradius R_{b} ausgehend von der Situation in der Figur 4 vergrößert (siehe Figur 5 im Vergleich zu Figur 4).

Hierdurch wird sichergestellt, dass Erfassungslücken, die zwischen den Erfassungsbereichen liegen, welche durch die Erfassungsradien Rₐ, R_{b} aufgespannt werden, eine Maximalgröße nicht überschreiten.

Es wird darauf hingewiesen, dass in den Darstellungen gemäß Figuren 4 bis 6 die Erfassungsbereiche lediglich in zwei Dimensionen dargestellt sind. In den Figuren überlappen sich die Erfassungsbereiche, was jedoch insgesamt, d.h. im Raum, nicht überall der Fall sein muss.

Wird weiterführend die Roboterbaugruppe 10 mit der Oberfläche 38 weiter in Richtung des Abschaltraums 32 bewegt, so kann sich der Abstand A der Abstandssensoreinheit 26a vom Abschaltraum 32 auf null reduzieren. Das ist in Figur 6 dargestellt.

An dieser Position wird die Abstandssensoreinheit 26a wirkungslos geschaltet, was dadurch illustriert ist, dass diese nicht mehr mit Begrenzungslinien versehen ist, die den zugehörigen Erfassungsbereich kennzeichnen. Der Erfassungsradius Rₐ ist in dieser Situation null.

Um weiterhin die Roboterbaugruppe 10 gegen Kollisionen abzusichern wird der Erfassungsradius R_{b} der Abstandssensoreinheit 26b abermals vergrößert (siehe Figur 6 im Vergleich zu Figur 5).

Es versteht sich, dass die anhand der Figuren 4 bis 6 erläuterten Einstellungen der Erfassungsradien Rₐ, R_{b} in umgekehrte Richtungen ablaufen, wenn die Roboterbaugruppe 10 aus dem Abschaltraum 32 heraus bzw. vom Abschaltraum 32 wegbewegt wird.

Zudem versteht es sich, dass der Radius Rₐ nicht zwangsläufig auf den Abstand A eingestellt werden muss (vergleiche Figur 5 und zugehörige Erläuterungen). Vielmehr ist es auch möglich, den Erfassungsradius Rₐ so einzustellen, dass er kleiner als der Abstand A ist. Beispielsweise kann der Erfassungsradius Rₐ auf 95% des Abstands A eingestellt werden. In dieser Variante wird also bewusst eine Erfassungslücke zwischen dem Erfassungsbereich der Abstandssensoreinheit 26a und dem Abschaltraum 32 in Kauf genommen. Allerdings wird sichergestellt, dass die Größe diese Erfassungslücke eine vorgegebene Maximalgröße nicht überschreitet. Auf diese Weise kann die Roboterbaugruppe 10 zuverlässig gegenüber Kollisionen abgesichert werden.

### Bezugszeichenliste

- 10: Roboterbaugruppe
- 12: Manipulatoreinheit
- 14: Effektoreinheit
- 16: Boden
- 18a: angetriebenes Gelenk
- 18b: angetriebenes Gelenk
- 18c: angetriebenes Gelenk
- 20: Arbeitsraum
- 22: Mensch
- 24a: Kollisionsobjekt
- 24b: Kollisionsobjekt
- 26: Abstandssensoreinheit
- 26a: Abstandssensoreinheit
- 26b: Abstandssensoreinheit
- 28: Steuerungseinheit
- 30a: Abstandssensor
- 30b: Abstandssensor
- 32: Abschaltraum
- 32a: Abschaltraum
- 32b: Abschaltraum
- 34: Sicherheitseinrichtung
- 35: Kiste
- 36: Pfeil
- 37: Umgebungsobjekt
- 38: Oberfläche
- A: Abstand einer Abstandssensoreinheit vom Abschaltraum
- b: Begrenzungslinie
- R: Erfassungsradius
- Rₐ: Erfassungsradius
- R_{b}: Erfassungsradius

## Patentansprüche

1. Verfahren zum Betrieb einer Roboterbaugruppe (10), wobei an einer Oberfläche (38) der Roboterbaugruppe (10) eine Mehrzahl an Abstandssensoreinheiten (26) zur Kollisionsabsicherung der Roboterbaugruppe (10) angeordnet ist, **dadurch gekennzeichnet, dass** das Verfahren die folgenden Schritte umfasst:
- Vorsehen eines Abschaltraums (32), der innerhalb eines Arbeitsraums (20) der Roboterbaugruppe (10) ortsfest oder abhängig von einer Pose der Roboterbaugruppe (10) definiert ist, wobei der Abschaltraum (32) ein Abschnitt des Arbeitsraums (20) der Roboterbaugruppe (10) ist, in dem eine unerwünschte Kollision der Roboterbaugruppe (10) oder ihrer Komponenten mit einem Menschen und/oder anderen Objekten ausgeschlossen werden kann,
- Betreiben derjenigen Abstandssensoreinheiten (26), die sich außerhalb des Abschaltraums (32) befinden, zur Kollisionsabsicherung der Roboterbaugruppe (10), und
- Wirkungsloshalten derjenigen Abstandssensoreinheiten (26), die sich innerhalb des Abschaltraums (32) befinden.

2. Verfahren nach Anspruch 1, wobei ein ortsfest definierter Abschaltraum (32) ein Abschnitt des Arbeitsraums (20) ist, der durch wenigstens ein Umgebungsobjekt (37) oder durch wenigstens eine Sicherheitseinrichtung (34) für Kollisionsobjekte (24a, 24b) unzugänglich ist.

3. Verfahren nach Anspruch 1 oder 2, wobei ein abhängig von einer Pose der Roboterbaugruppe (10) definierter Abschaltraum (32) ein Abschnitt des Arbeitsraums (20) ist, der durch eine die Pose bildende räumliche Anordnung von Komponenten der Roboterbaugruppe (10) für Kollisionsobjekte (24a, 24b) unzugänglich ist.

4. Verfahren nach einem der vorhergehenden Ansprüche, wobei der Abschaltraum (32) eingelernt wird.

5. Verfahren nach einem der vorhergehenden Ansprüche, wobei jede der Abstandssensoreinheiten (26) beim Einfahren in den Abschaltraum (32) wirkungslos geschaltet wird.

6. Verfahren nach einem der vorhergehenden Ansprüche, wobei jede der Abstandssensoreinheiten (26) beim Herausfahren aus dem Abschaltraum (32) zur Kollisionsabsicherung der Roboterbaugruppe (10) den Betrieb aufnimmt.

7. Verfahren nach einem der Ansprüche 1 bis 4, wobei für jede Abstandssensoreinheit (26) periodisch überprüft wird, ob sie sich innerhalb oder außerhalb des Abschaltraums (32) befindet.

8. Verfahren nach einem der vorhergehenden Ansprüche, wobei ein Erfassungsradius (R) einer benachbart zu einem Abschaltraum (32) positionierten Abstandssensoreinheit (26) auf einen Abstand (A) der Abstandssensoreinheit (26) vom Abschaltraum (32) eingestellt wird.

9. Verfahren nach einem der Ansprüche 1 bis 7, wobei ein Erfassungsradius (R) einer benachbart zu einem Abschaltraum (32) positionierten Abstandssensoreinheit (26) kleiner als ein Abstand (A) der Abstandssensoreinheit (26) vom Abschaltraum (32) eingestellt wird.

10. Verfahren nach einem der vorhergehenden Ansprüche, wobei Erfassungsradien (R) von an der Oberfläche (38) der Roboterbaugruppe (10) benachbart angeordneten Abstandssensoreinheiten (26), die aneinander angrenzende oder einander überlappende Erfassungsbereiche aufspannen, derart aufeinander abgestimmt werden, dass zwischen den Erfassungsbereichen liegende Erfassungslücken eine Maximalgröße nicht überschreiten.

11. Roboterbaugruppe (10) mit
einer Manipulatoreinheit (12) und/oder einer Effektoreinheit (14),
einer Mehrzahl an Abstandssensoreinheiten (26) zur Kollisionsabsicherung der Roboterbaugruppe (10), und
einer Steuerungseinheit (28),
wobei die Abstandssensoreinheiten (26) an einer Oberfläche (38) der Manipulatoreinheit (12) und/oder an einer Oberfläche der Effektoreinheit (14) angeordnet sind, und wobei die Steuerungseinheit (28) Mittel zur Ausführung des Verfahrens nach einem der vorhergehenden Ansprüche umfasst.

12. Roboterbaugruppe (10) nach Anspruch 11, wobei die Abstandssensoreinheiten (26) nach einem Time-of-Flight-Verfahren arbeiten.

13. Roboterbaugruppe (10) nach Anspruch 11 oder 12, wobei für jede Abstandssensoreinheit (26) ein Erfassungsradius (R) im Betrieb änderbar ist.

14. Roboterbaugruppe (10) nach einem der Ansprüche 11 bis 13, wobei jede der Abstandssensoreinheiten (26) mindestens zwei Abstandssensoren (30a, 30b) umfasst.

15. Roboterbaugruppe (10) nach Anspruch 14, wobei die Abstandssensoren (30a, 30b) einer Abstandssensoreinheit (26) unterschiedliche Sensorprinzipien nutzen, insbesondere wobei einer der Abstandssensoren (30a, 30b) ein elektromagnetisches, vorzugsweise optisches, Sensorprinzip nutzt und ein anderer der Abstandssensoren (30a, 30b) ein akustisches Sensorprinzip nutzt.

## Claims

1. Method for operating a robot assembly (10), wherein a plurality of distance sensor units (26) for collision protection of the robot assembly (10) is arranged on a surface (38) of the robot assembly (10),
**characterized in that** the method comprises the following steps:
- providing a shutdown space (32) which is defined within a working space (20) of the robot assembly (10) in a fixed manner or in dependence upon a pose of the robot assembly (10), wherein the shutdown space (32) is a section of the working space (20) of the robot assembly (10) in which it is possible to rule out an undesired collision of the robot assembly (10) or its components with a human and/or other objects,
- operating the distance sensor units (26) that are located outside the shutdown space (32) for collision protection of the robot assembly (10), and
- keeping the distance sensor units (26) that are located within the shutdown space (32) ineffective.

2. Method according to claim 1, wherein a fixedly, defined shutdown space (32) is a section of the working space (20) that is inaccessible to collision objects (24a, 24b) due to at least one surrounding object (37) or due to at least one safety device (34).

3. Method according to claim 1 or 2, wherein a shut-down space (32) that is defined in dependence upon a pose of the robot assembly (10) is a section of the working space (20) which is inaccessible to collision objects (24a, 24b) due to a spatial arrangement of components of the robot assembly (10) that are forming the pose.

4. Method according to one of the preceding claims, wherein the shutdown space (32) is learned.

5. Method according to one of the preceding claims, wherein each of the distance sensor units (26) is deactivated when it is moved into the shutdown space (32).

6. Method according to one of the preceding claims, wherein each of the distance sensor units (26) commences operation as it is moved out of the shutdown space (32) in order to protect the robot assembly (10) against collision.

7. Method according to one of claims 1 to 4, wherein a check is periodically performed as to whether each distance sensor unit (26) is located inside or outside the shutdown space (32).

8. Method according to one of the preceding claims, wherein a detection radius (R) of a distance sensor unit (26) that is positioned adjacent to a shutdown space (32) is set to a distance (A) of the distance sensor unit (26) from the shutdown space (32).

9. Method according to one of claims 1 to 7, wherein a detection radius (R) of a distance sensor unit (26) that is positioned adjacent to a shutdown space (32) is set smaller than a distance (A) of the distance sensor unit (26) from the shutdown space (32).

10. Method according to one of the preceding claims, wherein detection radii (R) of distance sensor units (26) which are arranged adjacent to one another on the surface (38) of the robot assembly (10) and which span adjacent or overlapping detection regions are matched to one another in such a manner that detection gaps that are located between the detection regions do not exceed a maximum size.

11. Robot assembly (10) having
a manipulator unit (12) and/or an effector unit (14),
a plurality of distance sensor units (26) for collision protection of the robot assembly (10), and
a control unit (28),
wherein the distance sensor units (26) are arranged on a surface (38) of the manipulator unit (12) and/or on a surface of the effector unit (14), and wherein the control unit (28) comprises means for implementing the method according to one of the preceding claims.

12. Robot assembly (10) according to claim 11, wherein the distance sensor units (26) operate according to a time-of-flight method.

13. Robot assembly (10) according to claim 11 or 12, wherein a detection radius (R) can be changed during operation for each distance sensor unit (26).

14. Robot assembly (10) according to one of claims 11 to 13, wherein each of the distance sensor units (26) comprises at least two distance sensors (30a, 30b).

15. Robot assembly (10) according to claim 14, wherein the distance sensors (30a, 30b) of a distance sensor unit (26) use different sensor principles, in particular wherein one of the distance sensors (30a, 30b) uses an electromagnetic, preferably optical, sensor principle and another of the distance sensors (30a, 30b) uses an acoustic sensor principle.

## Revendications

1. Procédé de fonctionnement d'un ensemble robot (10), dans lequel une pluralité d'unités de capteurs de distance (26) pour la protection contre les collisions de l'ensemble robot (10) sont disposées sur une surface (38) de l'ensemble robot (10),
**caractérisé en ce que** le procédé comprend les étapes suivantes consistant à :
- prévoir un espace de coupure (32) qui est défini fixe ou dépendant d'une pose de l'ensemble robot (10) à l'intérieur d'un espace de travail (20) de l'ensemble robot (10), l'espace de coupure (32) étant une partie de l'espace de travail (20) de l'ensemble robot (10) dans laquelle une collision non souhaitée de l'ensemble robot (10) ou ses composants avec une personne et/ou d'autres objets peut être exclue,
- faire fonctionner les unités de capteurs de distance (26) qui se trouvent à l'extérieur de l'espace de coupure (32), pour la protection contre les collisions de l'ensemble robot (10), et
- maintenir inopérants les unités de capteurs de distance (26) qui se trouvent à l'intérieur de l'espace de coupure (32).

2. Procédé selon la revendication 1, dans lequel un espace de coupure (32) défini fixe est une partie de l'espace de travail (20) qui est inaccessible à des objets de collision (24a, 24b) du fait d'au moins un objet environnant (37) ou d'au moins un dispositif de sécurité (34).

3. Procédé selon la revendication 1 ou 2, dans lequel un espace de coupure (32) défini dépendant d'une pose de l'ensemble robot (10) est une partie de l'espace de travail (20) qui est inaccessible à des objets de collision (24a, 24b) du fait d'une disposition dans l'espace, formant la pose, de composants de l'ensemble robot (10).

4. Procédé selon l'une des revendications précédentes, dans lequel l'espace de coupure (32) fait l'objet d'un apprentissage.

5. Procédé selon l'une des revendications précédentes, dans lequel chacune des unités de capteurs de distance (26) est désactivée lors de son entrée dans l'espace de coupure (32).

6. Procédé selon l'une des revendications précédentes, dans lequel chacune des unités de capteurs de distance (26) se met en fonctionnement pour la protection contre les collisions de l'ensemble robot (10) lors de sa sortie de l'espace de coupure (32).

7. Procédé selon l'une des revendications 1 à 4, dans lequel, pour chaque unité de capteurs de distance (26), il est vérifié périodiquement si elle se trouve à l'intérieur ou à l'extérieur de l'espace de coupure (32).

8. Procédé selon l'une des revendications précédentes, dans lequel un rayon de détection (R) d'une unité de capteurs de distance (26) positionnée adjacente à un espace de coupure (32) est réglé sur une distance (A) entre l'unité de capteurs de distance (26) et l'espace de coupure (32).

9. Procédé selon l'une des revendications 1 à 7, dans lequel un rayon de détection (R) d'une unité de capteurs de distance (26) positionnée adjacente à un espace de coupure (32) est réglé inférieur à une distance (A) entre l'unité de capteurs de distance (26) et l'espace de coupure (32).

10. Procédé selon l'une des revendications précédentes, dans lequel des rayons de détection (R) d'unités de capteurs de distance (26) disposées adjacentes sur la surface (38) de l'ensemble robot (10) et couvrant les domaines de détection adjacents les uns aux autres ou se chevauchant les uns les autres, sont adaptés les uns aux autres de telle manière que des lacunes de détection situées entre les domaines de détection ne dépassent pas une grandeur maximale.

11. Ensemble robot (10) comportant
une unité de manipulateur (12) et/ou une unité d'effecteur (14),
une pluralité d'unités de capteurs de distance (26) pour la protection contre les collisions de l'ensemble robot (10), et
une unité de commande (28),
les unités de capteurs de distance (26) étant disposées sur une surface (38) de l'unité de manipulateur (12) et/ou sur une surface de l'unité d'effecteur (14), et l'unité de commande (28) comprenant des moyens d'exécution du procédé selon l'une des revendications précédentes.

12. Ensemble robot (10) selon la revendication 11, dans lequel les unités de capteurs de distance (26) fonctionnent selon un procédé de « temps de vol ».

13. Ensemble robot (10) selon la revendication 11 ou 12, dans lequel, pour chaque unité de capteurs de distance (26), un rayon de détection (R) peut être modifié en cours de fonctionnement.

14. Ensemble robot (10) selon l'une des revendications 11 à 13, dans lequel chacune des unités de capteurs de distance (26) comprend au moins deux capteurs de distance (30a, 30b).

15. Ensemble robot (10) selon la revendication 14, dans lequel les capteurs de distance (30a, 30b) d'une unité de capteurs de distance (26) utilisent différents principes de détection, notamment dans lequel un des capteurs de distance (30a, 30b) utilise un principe de détection électromagnétique, de préférence optique, et un autre des capteurs de distance (30a, 30b) utilise un principe de détection acoustique.
